# EUROPÄISCHE PATENTSCHRIFT

(11) **EP 2 469 129 B1**
(45) Veröffentlichungstag und Bekanntmachung des Hinweises auf die Patenterteilung: **17.07.2013**
(21) Anmeldenummer: 11009836.5
(22) Anmeldetag: 14.12.2011
(51) Int. Cl.: F16H 61/00, F16H 63/48

(54) **Vorrichtung zum Betätigen einer Parksperre**
Method for actuating a parking brake
Dispositif d'actionnement d'une position de stationnement

(30) Priorität: 22.12.2010 DE 102010055859
(43) Veröffentlichungstag der Anmeldung: 27.06.2012
(73) Patentinhaber: Audi AG, 85045 Ingolstadt (DE)
(72) Erfinder: Bauer, Martin, 85053 Ingolstadt (DE); Gieles, Wilhelmus, 85139 Wettstetten (DE)
(74) Vertreter: Lehle, Josef

(56) Entgegenhaltungen:
- WO-A1-2005/124198
- DE-A1- 10 014 465
- DE-A1- 19 625 019
- DE-A1-102004 043 344

## Beschreibung

Die Erfindung betrifft eine Vorrichtung zum Betätigen einer Parksperre eines automatischen Getriebes in Kraftfahrzeugen gemäß dem Oberbegriff des Patentanspruches 1 und wie aus der DE 100 14 465 A1 bekannt.

Mit der Weiterentwicklung automatischer Getriebe in Kraftfahrzeugen sind bereits Getriebesteuerungen bekannt, die im shift by wire System auch die Parksperre miteinbeziehen, so dass diese mit Ausnahme gegebenenfalls einer Notentriegelung nicht mehr mechanisch zum Beispiel über einen Wählhebel der Getriebesteuerung betätigbar ist. Es versteht sich, dass eine derartige automatisierte Steuerung der Parksperre so abgesichert sein muss, dass bei auftretenden Fehlern in der Ansteuerung (zum Beispiel elektrische Leitungsunterbrechungen, Kurzschlüsse, Druckausfall im hydraulischen System) ein unbeabsichtigtes Auslegen der Parksperre bei Fahrzeugstillstand oder ein Einlegen der Parksperre während der Fahrt des Kraftfahrzeuges weitgehendst ausgeschlossen ist.

Durch die DE 196 25 019 A1 ist es dazu bekannt, neben der hydraulischen Ansteuerung der Parksperrenbetätigung zusätzlich ein elektromagnetisches Verriegelungselement vorzusehen, das die Sperrklinke der Parksperre zur hydraulischen Beaufschlagung in der ausgelegten Position hält, wodurch zum Beispiel bei einem Systemdruckausfall in der hydraulischen Getriebesteuerung (zum Beispiel durch Motorstillstand) die Parksperre nicht ungewollt einfahren kann. Im Übrigen ist durch eine logische Verknüpfung in einem elektronischen Getriebesteuergerät abgesichert, dass die Parksperre nur nach Maßgabe einer Wähleinrichtung und/oder nach definierten Betriebsparametern des Kraftfahrzeuges (zum Beispiel Zündschlüsselstellung, Fahrzeuggeschwindigkeit, Zustand einer Feststellbremse, Motordrehzahl, etc.) durch entsprechende Ansteuerung entsprechender Steuerventile (in der DE nicht dargestellt) und des Verriegelungselementes automatisch eingelegt bzw. ausgelegt wird. Ein vorteilhaftes, geringen Stromverbrauch aufweisendes Verriegelungselement dazu beschreibt beispielsweise die DE 198 34 156 A1.

Eine elektronisch-hydraulische Steuereinrichtung eines Automatik-Getriebes eines Kraftfahrzeuges ist ferner auch aus der DE 100 14 465 A1, die alle Merkmale des Oberbegriffs des Anspruchs 1 offenbart, bekannt, mittels der bei einer Störung der elektrischen Wirkverbindung oder eines elektrischen Steuergerätes, welche die Abschaltung der Elektronik zur Folge hat, sichergestellt werden soll, dass wenigstens ein vorbestimmtes Schaltelement für Vorwärtsfahrt mittels eines hydraulischen Reversierventils druckbeaufschlagt bleibt, wobei ein das Reversierventil rücksetzender Druck von der Fahrzeuggeschwindigkeit abhängig sein soll.

Ein Parksperrensystem mit einer Getriebeeinrichtung ist ferner auch aus der DE 10 2004 043 344 A1 bekannt, bei der ein Ventilschieber des Parksperrenventils in einer ersten Position einer Kolbenstange mit einem über eine Aktuatoreinrichtung einstellbaren Steuerdruck beaufschlagt werden soll, der dem Steuerdruck des Aktuators derart entgegenwirkt, dass eine an der Kolbenstange angreifende resultierende Gesamtkraftkomponente in Richtung der ersten Position der Kolbenstange wirkt.

Aus der DE 196 25 019 A1 ist ein Kraftfahrzeug mit einem Automatikgetriebe bekannt, bei dem die Parksperre eingelegt wird, wenn die Fahrgeschwindigkeit des Kraftfahrzeugs Null ist und gleichzeitig ein Zündstromkreis, insbesondere mit einem Zündschlüssel unterbrochen wurde und danach eine vorbestimmte Zeitspanne verstrichen ist oder danach eine Fahrzeugtür geöffnet wird, oder spätestens wenn der Zündschlüssel aus einem Zündschloss entfernt ist.

Ferner zeigt die WO 2005/124198 A1 eine Aktuatorvorrichtung zum Betätigen eines Verriegelungsmechanismus zum Betätigen einer Parksperreneinrichtung.

Aufgabe der Erfindung ist es, eine Vorrichtung der gattungsgemäßen Art aufzuzeigen, bei der die hydraulische Ansteuerung der Parksperre mit einfachen Ventilmitteln und besonders ausfallsicher ausgeführt ist.

Diese Aufgabe wird erfindungsgemäß mit den Merkmalen des Patentanspruches 1 gelöst. Vorteilhafte und besonders zweckmäßige Weiterbildungen der Erfindung sind in den weiteren Patentansprüchen angeführt.

Gemäß Anspruch 1 wird vorgeschlagen, dass in die hydraulische Getriebesteuerung ein rein hydraulisch wirkendes Selbsthalteventil integriert ist, das bei Druckbeaufschlagung der Parksperrenbetätigung bzw. bei ausgelegter Parksperre einen eingesteuerten Systemdruck aufrechterhält. Das Selbsthalteventil bewirkt eine Stabilisierung der Druckbeaufschlagung der Parksperre im ausgelegten Zustand, so dass zum Beispiel bei einer Unterbrechung in der elektrischen Ansteuerung oder einer anderen Fehlfunktion in einfacher Weise ein unbeabsichtigtes Einfallen der Parksperre vermieden ist. Erfindungsgemäß ist das Selbsthalteventil in der Druckleitung der Parksperrenbetätigung bistabil ausgeführt und in der deaktivierten Grundstellung über die Steuerleitung eines Drucksteuerventils und in der aktiven Ventilstellung über die Druckleitung der Parksperren betätigung (14) druckbeaufschlagt. Dies stellt eine relativ robuste und funktionssichere Ausführung sicher, bei der das Selbsthalteventil druckgesteuert entweder über das Drucksteuerventil oder über die Druckleitung der Parksperrenbetätigung aktiviert wird. Weiter ist erfindungsgemäß vorgesehen, dass eine weitere Steuerleitung eines in der Druckleitung zur Parksperrenbetätigung stromab des Selbsthalteventils angeordneten Absteuerventils vorgesehen ist, die mit dem Selbsthalteventil verbunden ist und das Selbsthalteventil zum Umschalten in die Grundstellung einseitig druckentlastet.

Ferner wird gemäß einer bevorzugten Ausführungsform vorgeschlagen, dass in die Druckleitung zur Parksperrenbetätigung stromauf des Selbsthalteventils ein Drosselelement eingeschaltet ist, das vermeidet, dass bei einem Druckaufbau in der hydraulischen Getriebesteuerung bei einem vorangegangenen Motorstillstand des Kraftfahrzeuges das Selbsthalteventil in die Selbsthalte-Ventilstellung verstellt wird. Dies könnte gegebenenfalls durch unterschiedliche Leitungswiderstände oder Leitungslängen zwischen der Steuerleitung des Drucksteuerventils einerseits und der Druckleitung zum Selbsthalteventil andererseits bewirkt werden, wobei das Drosselelement jedoch den Druckaufbau in der Druckleitung vorteilhaft gegenüber der Steuerleitung des Drucksteuerventils verzögert.

Durch die bistabile Funktion des Selbsthalteventils kann in vorteilhafter Weise das elektromagnetisch betätigbare Drucksteuerventil zum Auslegen der Parksperre nur kurzzeitig bis zum Ansprechen des Selbsthalteventils elektrisch angesteuert sein. Dies verringert den Stromverbrauch in der Getriebesteuerung bei einer robusteren, Verschleiß unempfindlicheren Ventilsteuerung.

Gleiches gilt auch für das elektromagnetisch betätigbare Absteuerventil zum Einlegen der Parksperre, welches ebenfalls nur kurzeitig solange bestromt ist, bis das Selbsthalteventil deaktiviert bzw. in der Grundstellung die parallele Druckleitung mit dem Rücklauf der hydraulischen Getriebesteuerung verbindet. In vorteilhafter Weiterbildung der Erfindung können das Drucksteuerventil und das Selbsthalteventil an die System-Hauptdruckleitung angeschlossen sein, ferner sind das Selbsthalteventil und das Absteuerventil in der zur Parksperrenbetätigung führenden Druckleitung hintereinander geschaltet, wobei in deren deaktivierter, federbelasteter Grundstellung das Drucksteuerventil mit der Hauptdruckleitung, das Selbsthalteventil mit dem Rücklauf und das Absteuerventil mit der Druckleitung verbunden sind und wobei des Weiteren das Selbsthalteventil mit seinen die Selbsthaltung oder die Grundstellung bewirkenden Schaltfläche über eine Steuerleitung des Drucksteuerventils oder über eine weitere Steuerleitung mit der Druckleitung stromab des Absteuerventils verbunden sind.

Insbesondere können in fertigungstechnisch günstiger Weise das Drucksteuerventil, das Selbsthalteventil und das Absteuerventil als 3/2 Wegeventile ausgeführt sein.

Schließlich können das Drucksteuerventil, das Absteuerventil und das Verriegelungselement über eine elektronische Getriebesteuereinheit nach Maßgabe einer Wählhebeleinrichtung und weiteren Betriebsparametern des Kraftfahrzeuges wie Fahrgeschwindigkeit, Motordrehzahl, Betriebszustandsschalter (Zündschalter) etc. gesteuert sein.

Ein Ausführungsbeispiel der Erfindung ist im Folgenden mit weiteren Einzelheiten näher erläutert. Die schematische Zeichnung zeigt in:
- Fig. 1: einen hydraulischen Schaltplan der hydraulischen Getriebesteuerung der Parksperre eines automatischen Getriebes in einem Kraftfahrzeug, mit einem Drucksteuerventil, einem Selbsthalteventil und einem Absteuerventil, sowie mit einem elektromagnetischen Verriegelungselement für die Parksperre;
- Fig. 2: ein vereinfachtes Schaltbild der elektrischen Ansteuerung der hydraulischen Ventile und des Verriegelungselementes nach Fig. 1; und
- Fig. 3: eine beispielhafte Tabelle zur Anzeige der Ansteuerung des Drucksteuerventils, des Absteuerventils und des Verriegelungselementes abhängig von definierten Betriebszuständen des Kraftfahrzeuges.

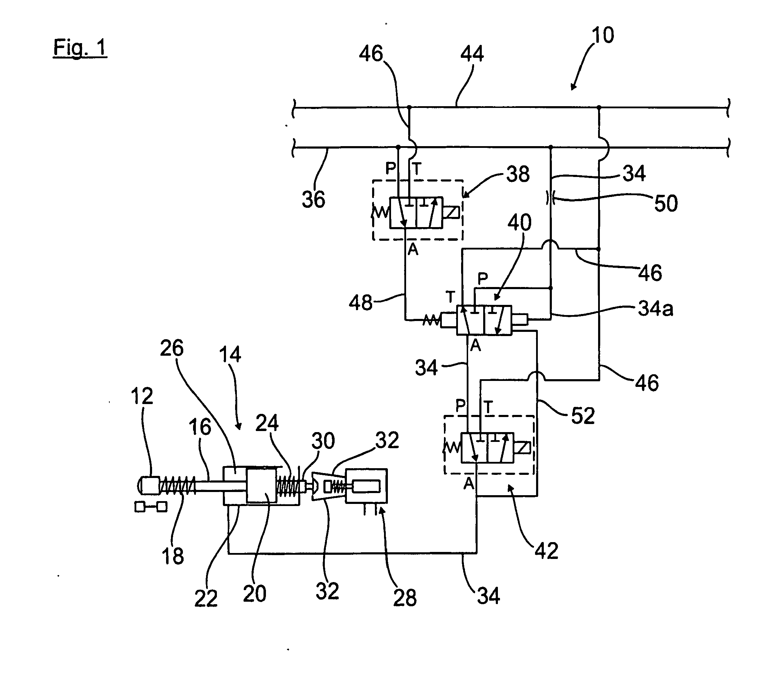

In der Fig. 1 ist mit 10 der im Rahmen der vorliegenden Erfindung interessierende Abschnitt einer elektrohydraulischen Getriebesteuerung zum Einlegen oder Auslegen einer Parksperre eines automatischen Getriebes in Kraftfahrzeugen bezeichnet.

Die nicht dargestellte Parksperre kann bekannter Bauart sein, mit einem im Abtrieb des Getriebes angeordneten Sperrzahnrad, das mit einer federnd vorgespannten, im Getriebegehäuse schwenkbar gelagerten Sperrklinke zusammenwirkt, die über einen Sperrschieber 12 der Parksperrenbetätigung 14 von einer ausgelegten (ungesperrten) Position in eine eingelegte (gesperrte) Position überführbar ist. Der Sperrschieber 12 ist in bekannter Weise auf einer Stellstange 16 durch eine Feder 18 vorgespannt verschiebbar geführt, um bei einer Zahn-auf-Zahn Stellung zwischen dem Sperrzahnrad und der Sperrklinke dennoch den vorgegebenen Stellweg der Stellstange 16 zu ermöglichen.

Die Stellstange 16 ist mit einem Kolben 20 fest verbunden, der in einem gehäusefesten Zylinder 22 verschiebbar geführt ist und der mittels einer Schraubendruckfeder als Federspeicher 24 ständig auf der Zeichnung nach links federnd vorgespannt ist. Durch den Federspeicher 24 wird die Parksperre durch entsprechendes Verschieben der Stellstange 16 mit dem Sperrschieber 12 in die eingelegte Position verstellt.

Zum Auslegen der Parksperre wird der linksseitig des Kolbens 20 vorgesehene Hydraulikraum 26 der Kolben-Zylindereinheit 20, 22 mit Hydraulikdruck aus der Getriebesteuerung 10 beaufschlagt, wobei die Stellstange 16 mit dem Sperrschieber 12 auf der Zeichnung nach rechts verlagert wird und damit die Sperrklinke der Parksperre freigibt, so dass diese aus dem Sperrzahnrad ausfährt.

In der ausgelegten Position der Parksperrenbetätigung 14 kann diese über ein elektromagnetisches Verriegelungselement 28 gehalten werden. Das Verriegelungselement 28 - das dem eingangs genannten Stand der Technik entsprechen kann und deshalb nicht näher beschrieben ist - wirkt mit einem am Kolben 20 angeordneten Verriegelungsstift 30 formschlüssig derart zusammen, dass bei bestromten Verriegelungselement 28 an diesem ausgebildete Fanghaken 32 elektromagnetisch betätigt den Verriegelungsstift 30 formschlüssig hintergreifen und den Kolben 20 mit der Stellstange 16 in der ausgelegten Position der Parksperre halten, während im unbestromten Zustand des Verriegelungselementes 28 die Fanghaken 32 die Parksperrenbetätigung 14 freigeben bzw. das Einlegen der Parksperre ermöglichen.

Die hydraulische Ansteuerung der Parksperrenbetätigung 14 bzw. die Druckbeaufschlagung des Hydraulikraumes 26 wird bewerkstelligt über eine Druckleitung 34, die an eine System-Hauptdruckleitung 36 der nicht weiter dargestellten hydraulischen Getriebesteuerung 10 angeschlossen ist, die über eine von der Antriebsmaschine bzw. dem Motor des Kraftfahrzeuges angetriebene Hydraulikpumpe einen definierten Systemdruck aufweist.

In die Druckleitung 34 sind in Strömungsrichtung betrachtet ein Selbsthalteventil 40 und ein Absteuerventil 42 eingeschaltet, die als 3/2 Wegeventile ausgeführt sind, wobei das Selbsthalteventil 40 rein hydraulisch betätigt ist, während das Absteuerventil 42 elektromagnetisch gesteuert ist.

Ebenfalls an die System-Hauptdruckleitung 36 angeschlossen ist ein Drucksteuerventil 38, das ebenfalls als 3/2 Wegeventil ausgeführt ist und das über eine erste Steuerleitung 48 an die linksseitige Kolbenfläche (nicht dargestellt) des Selbsthalteventils 40 angeschlossen ist.

In der durch Federvorspannung vorgegebenen Grundstellung des Drucksteuerventils 38 ist dieses gegenüber der Steuerleitung 48 bzw. der Hauptdruckleitung 36 geöffnet bzw. über die Steuerleitung 48 mit dem Selbsthalteventil 40 verbunden (Ventilstellung von P zu A) und hält somit das Selbsthalteventil 40 durch hydraulische Beaufschlagung und durch Federvorspannung in der Grundstellung.

Im bestromten Zustand schaltet das Drucksteuerventil 38 in eine Stellung A zu T, in der die Steuerleitung 48 an eine drucklose Rücklaufleitung 46 eines System-Rücklaufes 44 der hydraulischen Getriebesteuerung 10 angeschlossen ist.

Das Absteuerventil 42 ist in der federnd vorgespannten Grundstellung geöffnet bzw. verbindet die Druckleitung 34 entsprechend von P nach A. Durch Bestromung des Absteuerventils 42 verbindet dieses den stromab liegenden Abschnitt der Druckleitung 34 über eine Rücklaufleitung 46 mit dem Rücklauf 44 der hydraulischen Getriebesteuerung 10 (Ventilstellung von A zu T).

Das in die Druckleitung 34 eingeschaltete Selbsthalteventil 40 verbindet in der federnd und (bei vorhandenem Systemdruck) hydraulisch vorgespannten

Grundstellung den stromab von diesem liegenden Abschnitt der Druckleitung 34 ebenfalls mit der Rücklaufleitung 46 (von A zu T), während es in der Selbsthalteposition die Druckleitung 34 durchgängig schaltet (von P zu A).

In die Druckleitung 34 ist des Weiteren stromauf des Selbsthalteventils 40 ein Drosselelement 50 mit einem definiert vermindertem Durchströmquerschnitt eingeschaltet. Das Drosselelement 50 stellt sicher, dass bei einem beginnenden Systemdruckaufbau (bei Motorstart) das bistabile Selbsthalteventil 40 in der Grundstellung verharrt.

Ein abzweigender Ast 34a der Druckleitung 34 beaufschlagt zudem die rechtsseitige Kolbenfläche (nicht dargestellt) des Ventilkolbens im Selbsthaltventil 40 zur Erzielung der hydraulischen Selbsthaltung bei druckloser erster Steuerleitung 48.

Die Selbsthaltefunktion des Selbsthalteventils 40 wird über das Absteuerventil 42 aufgehoben, indem eine stromab des Absteuerventils 42 abzweigende, zweite Steuerleitung 52 ventilintern mit dem Hydraulikdruck führenden Ast 34a der Druckleitung 34 bzw. der rechtsseitigen Kolbenfläche verbunden ist und den Hydraulikdruck bei bestromten Absteuerventil 42 über die Rücklaufleitung 46 zum Rücklauf 44 abbaut.

Die hydraulische Funktion der beschriebenen Ventile 38, 40, 42 ist wie folgt:

Ist die Parksperre über den Federspeicher 24 eingelegt und soll bei Inbetriebnahme des Kraftfahrzeuges (wird noch beschrieben) ausgelegt werden, so wird bei laufendem Motor (Hydraulikdruck im System 10 vorhanden) das Drucksteuerventil 38 kurzfristig bestromt und somit in den Zustand A zu T verstellt. Dies führt zu einer linksseitigen Druckentlastung des Selbsthalteventils 40 über die Steuerleitung 48, so dass das Selbsthalteventil 40 von der Grundstellung A zu T nach P zu A umschaltet und den stromab liegenden Abschnitt der Druckleitung 34 mit Hydraulikdruck versorgt, der sich durch das unbestromte Absteuerventil 42 hindurch in den Hydraulikraum 26 der Kolben-Zylindereinheit 20, 22 fortpflanzt und dementsprechend die Parksperre auslegt.

Der ausgelegte Zustand wird über das zugleich bestromte, elektromagnetische Verriegelungselement 28 gehalten. Ferner wird als redundante Absicherung der den Auslegezustand der Parksperre haltende Hydraulikdruck über das bistabile Selbsthalteventil 40 aufrechterhalten.

Soll die Parksperre wieder eingelegt werden, so wird einerseits die Bestromung des elektromagnetischen Verriegelungselementes 28 unterbrochen und andererseits das Absteuerventil 42 kurzfristig bestromt, so dass dieses den stromab liegenden Abschnitt der Druckleitung 34 und die davon abzweigende Steuerleitung 52 mit der Rücklaufleitung 46 und dem Systemrücklauf 44 der hydraulischen Getriebesteuerung verbindet und damit die Selbsthaltung des Selbsthalteventils 40 auflöst. Das Selbsthalteventil 40 geht somit linksseitig hydraulisch beaufschlagt wieder in die beschriebene Grundstellung über.

Durch die damit verbundene Druckentlastung des Hydraulikraumes 26 wird die Parksperre aufgrund der Federkraft des Federspeichers 24 wieder eingelegt.

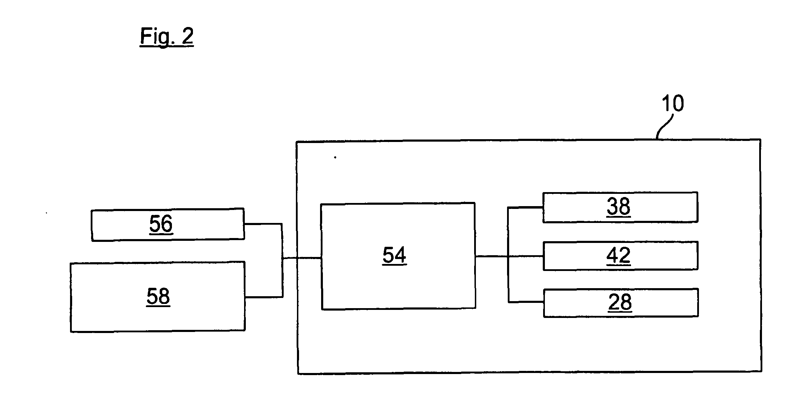

Gemäß Fig. 2 wird die beschriebene Betätigung der Parksperre über eine elektronische Steuereinheit 54 gesteuert, die nach Maßgabe einer Wähleinrichtung 56 - dies kann ein Wählhebel oder ein elektrischer Schalter sein, der in eine Stellung P schaltbar ist - und nach Maßgabe weiterer Betriebsparameter 58 des Kraftfahrzeuges wie zum Beispiel die Fahrzeuggeschwindigkeit, den Motorbetriebszustand, die Stellung eines Zündschalters, etc. das Drucksteuerventil 38, das Absteuerventil 42 und das elektromagnetische Verriegelungselement 28 entsprechend ansteuert.

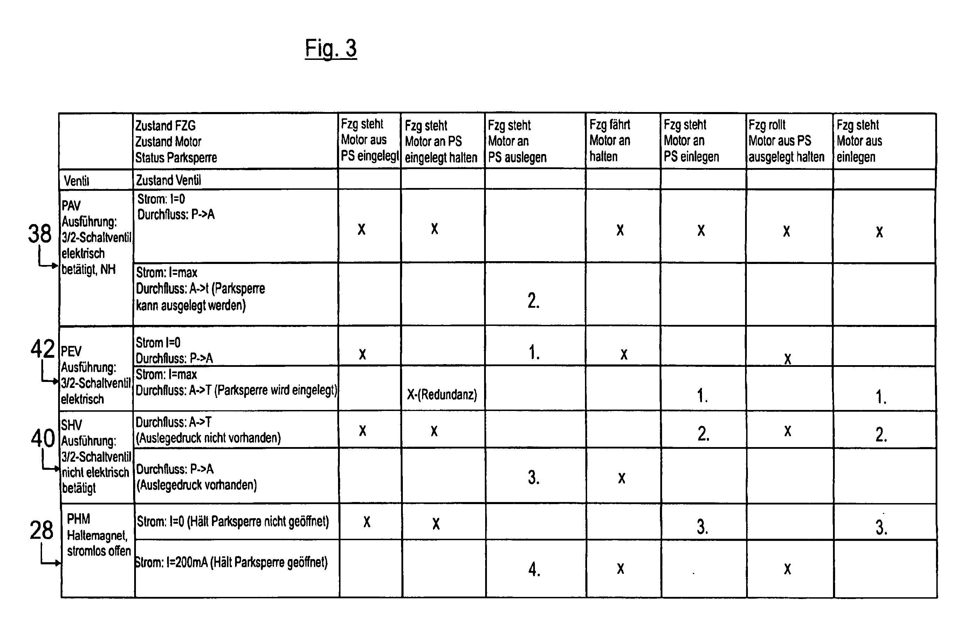

Die Tabelle gemäß Fig. 3 zeigt dazu einige Betriebszustände des Kraftfahrzeuges (Fahrzeug) bei stehendem oder fahrendem Fahrzeug und bei ein- oder ausgeschaltetem Motor an oder aus und den dazu über die Steuereinheit 54 geschalteten und eingesteuerten Status der Ventile 38, 40, 42 und das elektromagnetische Verriegelungselement 28 bei jeweils eingelegter oder ausgelegter Parksperre PS. Mit "x" ist im Diagramm der Fig. 3 angezeigt, ob das jeweilige Steuerungselement 38, 40, 42, 28 angesteuert bzw. aktiviert oder deaktiviert ist. Die eingezeichneten Zahlen (gegebenenfalls 1 bis 4) geben den zeitlichen Ablauf der Steuerungsfunktionen wieder. Im Diagramm der Fig. 3 ist das Drucksteuerventil 38 auch mit PAV (Parksperrenauslegeventil), das Absteuerventil 42 mit PEV (Perksperreneinlegeventil), das Selbsthalteventil 40 mit SHV und das Verriegelungselement 28 mit PHM (Parksperrenhaltemagnet) bezeichnet.

Obwohl die Tabelle gemäß Fig. 3 selbsterklärend ist, sollen einige Betriebszustände näher erläutert werden:

So wird in Spalte 1 als Betriebszustand davon ausgegangen, dass das Fahrzeug steht, der Motor aus ist und PS (Parksperre) eingelegt ist (Parkzustand); nicht eingezeichnet ist die Stellung P der Wähleinrichtung 56 (sofern vorhanden):

Gemäß der Tabelle bzw. den eingezeichneten "x" ist das Drucksteuerventil 38 unbestromt (i = 0) in der Grundstellung; ebenfalls unbestromt in der Grundstellung ist das Absteuerventil 42; daraus resultierend befindet sich auch das Selbsthalteventil 40 in der Grundstellung und schließlich ist auch das Verriegelungselement 28 unbestromt bzw. deaktiviert.

Wird gemäß Spalte 2 nur der Motor gestartet, es soll PS aber eingelegt bleiben, so können die Steuerungselemente 38, 40, 42, 28 unverändert gehalten werden; als Absicherung kann aber das Absteuerventil 42 bestromt werden, um redundant sicherzustellen, dass das Selbsthalteventil 40 bei sich aufbauendem Systemdruck zuverlässig in seiner Grundstellung verharrt.

In Spalte 3 wird davon ausgegangen, dass durch Herausschalten der Wähleinrichtung 56 aus P und/oder durch Einlegen einer Vorwärts- oder Rückwärts-Fahrstufe des Getriebes angefahren werden soll; somit wird:
1. Das Absteuerventil 42 stromlos geschaltet;
2. das Drucksteuerventil 38 kurzzeitig bestromt;
3. daraus resultierend wechselt das Selbsthalteventil 40 von seiner Grundstellung in die Selbsthaltestellung, wodurch die Parksperrenbetätigung 14 druckbeaufschlagt und die Parksperre ausgelegt wird;
4. das elektromagnetische Verriegelungselement 28 bestromt und dementsprechend die Parksperre in der ausgelegten Position zusätzlich gehalten.

Die beschriebenen Steuervorgänge werden über die elektronische Steuereinheit 54 entsprechend gesteuert.

Das Wiedereinlegen der Parksperre PS kann abhängig von den Fahrzeugen-Betriebsparametern 58 und der Stellung der Wähleinrichtung 56 zum Beispiel gemäß Spalte 5 wie folgt ablaufen:

Bei stehendem Fahrzeug, noch in Betrieb befindlichem Motor und Stellung der Wähleinrichtung in P (oder gegebenenfalls in N) ist das Drucksteuerventil 38 in Grundstellung (unbestromt); dann wird:
1. das Absteuerventil 42 bestromt und verbindet die Druckleitung 34 mit dem drucklosen Rücklauf 46, 44, wodurch
2. das Selbsthalteventil 40 rechtsseitig druckentlastet, wodurch es linksseitig druckbeaufschlagt in die Grundstellung umschaltet; und
3. die Bestromung des elektromagnetischen Verriegelungselementes 28 abgeschaltet.

Daraus resultierend wird die Parksperre PS bei drucklosem Hydraulikraum 26 über den Federspeicher 24 wieder eingelegt.

Die weiteren, möglichen Steuerungsfunktionen der Parksperre PS sind den weiteren Spalten der Tabelle entnehmbar, die jedoch nur beispielhaft ist. Es können auch weitere Fahrzeug-Betriebsparameter in die Betätigungslogik einbezogen sein.

## Patentansprüche

1. Vorrichtung zum Betätigen einer Parksperre eines automatischen Getriebes in Kraftfahrzeugen, mit einer mit einem Sperrzahnrad zusammenwirkenden Sperrklinke, die zum Einlegen der Parksperre durch einen Federspeicher (24), der Bestandteil einer Parksperren betätigung (14) ist, beaufschlagt ist und die zum Auslegen der Parksperre durch eine hydraulische Getriebesteuerung mit entsprechenden Steuerventilen hydraulisch entgegen der Vorspannkraft des Federspeichers (24) beaufschlagbar ist, wobei die Steuerventile nach Maßgabe von Betriebsparametern des Kraftfahrzeuges und einer Wähleinrichtung elektrisch ansteuerbar sind, sowie mit einem elektromagnetisch betätigbaren Verriegelungselement (28), welches Bestandteil der Parksperren betätigung (14) ist und im angesteuerten Zustand die Sperrklinke bei definierten Betriebszuständen des Kraftfahrzeuges zusätzlich in der ausgelegten Position hält, wobei in die hydraulische Getriebesteuerung (10) ein rein hydraulisch wirkendes Selbsthalteventil (40) integriert ist, das bei Druckbeaufschlagung der Parksperrenbetätigung (14) oder bei ausgelegter Parksperre einen eingesteuerten Systemdruck aufrechterhält,
**dadurch gekennzeichnet, dass** das Selbsthalteventil (40) in einer Druckleitung (34) der Parksperrenbetätigung (14) bistabil ausgeführt ist und in der deaktivierten Grundstellung über eine Steuerleitung (48) eines Drucksteuerventils (38) und in der aktiven Ventilstellung über die Druckleitung (34) der Parksperren betätigung (14) druckbeaufschlagt ist, wobei das Selbsthalteventil (40) über eine weitere Steuerleitung (52) mit einem in der Druckleitung (34) zur Parksperrenbetätigung (14) stromab des Selbsthalteventils (40) angeordneten Absteuerventils (42) verbunden ist und über dieses zum Umschalten in die Grundstellung einseitig druckentlastbar ist.

2. Vorrichtung nach Anspruch 1, **dadurch gekennzeichnet, dass** in die Druckleitung (34) zur Parksperrenbetätigung (14) stromauf des Selbsthalteventils (40) ein Drosselelement (50) eingeschaltet ist.

3. Vorrichtung nach Anspruch 1 oder 2, **dadurch gekennzeichnet, dass** das Drucksteuerventil (38) und das Selbsthalteventil (40) an die System-Hauptdruckleitung (36) angeschlossen sind, dass ferner das Selbsthalteventil (40) und das Absteuerventil (42) in der zur Parksperrenbetätigung (14) führenden Druckleitung (34) hintereinander geschaltet sind, wobei in deren deaktivierter Grundstellung das Drucksteuerventil (38) mit der Hauptdruckleitung (36), das Selbsthalteventil (40) mit dem Rücklauf (46) und das Absteuerventil (42) mit der Druckleitung (34) verbunden sind und dass das Selbsthalteventil (40) mit seinen die Selbsthaltung oder die Grundstellung bewirkenden Schaltflächen über eine Steuerleitung (48) des Drucksteuerventils (38) oder über eine weitere Steuerleitung (52) mit der Druckleitung (34) stromab des Absteuerventils (42) verbunden sind.

4. Vorrichtung nach einem der Ansprüche 1 bis 3, **dadurch gekennzeichnet, dass** das Drucksteuerventil (38), das Selbsthalteventil (40) und das Absteuerventil (42) als 3/2 Wegeventile ausgeführt sind.

5. Vorrichtung nach einem der Ansprüche 1 bis 4, **dadurch gekennzeichnet, dass** das Drucksteuerventil (38), das Absteuerventil (42) und das Verriegelungselement (28) über eine elektronische Getriebesteuereinheit (54) nach Maßgabe einer Wählhebeleinrichtung (56) und/oder weiteren Betriebsparametern (58) des Kraftfahrzeuges gesteuert sind.

## Claims

1. Device for operating a parking brake of an automatic transmission in a motor vehicle, comprising a pawl which cooperates with a ratchet and is loaded by a spring mechanism (24), which mechanism is a component of the parking brake actuator (14), to engage the parking brake, and can be hydraulically loaded against the prestressing force of the spring mechanism (24) by a hydraulic transmission control system comprising corresponding control valves to disengage the parking brake, the control valves being electrically controllable in accordance with operating parameters of the motor vehicle and a selection means, and comprising an electromagnetically operable locking element (28) which is a component of the parking brake actuator (14) and, when triggered, additionally holds the pawl in the disengaged position when the operating conditions of the motor vehicle are defined, a purely hydraulic locking valve (40) being integrated in the hydraulic transmission control system (10), which valve maintains a controlled system pressure when pressure is applied to the parking brake actuator (14) or when the parking brake is disengaged, **characterised in that** the locking valve (40) is configured to be bi-stable in a delivery line (34) of the parking brake actuator (14) and is pressurised in the deactivated starting position by a control line (48) of a pressure control valve (38) and pressurised in the active valve position by the delivery line (34) of the parking brake actuator (14), the locking valve (40) being connected via a further control line (52) to a reset valve (42) which is arranged in the delivery line (34) to the parking brake actuator (14) downstream of the locking valve (40) and, via said reset valve, being able to release pressure on one side to switch to the starting position.

2. Device according to claim 1, **characterised in that** a throttle element (50) is switched on in the delivery line (34) to the parking brake actuator (14) upstream of the locking valve (40).

3. Device according to either claim 1 or claim 2, **characterised in that** the pressure control valve (38) and the locking valve (40) are connected to the main delivery line (36) of the system, **in that** the locking valve (40) and the reset valve (42) are arranged in series in the delivery line (34) leading to the parking brake actuator (14), the pressure control valve (38) being connected to the main delivery line (36), the locking valve (40) being connected to the return line (46), and the reset valve (42) being connected to the delivery line (34) in the deactivated starting position thereof, and **in that** the locking valve (40) has switching surfaces for implementing the locking position or the starting position thereof, said switching surfaces being connected to the delivery line (34) downstream of the reset valve (42) via a control line (48) of the pressure control valve (38) or via a further control line (52).

4. Device according to any of claims 1 to 3, **characterised in that** the pressure control valve (38), the locking valve (40), and the reset valve (42) are configured as 3/2-way valves.

5. Device according to any of claims 1 to 4, **characterised in that** the pressure control valve (38), the reset valve (42), and the locking element (28) are controlled via an electronic transmission control system (54) in accordance with a selector lever (56) and/or further operating parameters (58) of the motor vehicle.

## Revendications

1. Dispositif d'actionnement d'une position de stationnement d'une transmission automatique dans des véhicules automobiles, comprenant un cliquet d'arrêt coopérant avec une roue à rochet, lequel cliquet est sollicité pour enclencher la position de stationnement par un accumulateur à ressort (24), qui fait partie d'une commande de position de stationnement (14), et qui peut être sollicité pour dégager la position de stationnement par une commande de transmission hydraulique avec des soupapes de commande correspondantes en mode hydraulique à l'encontre de la force de précontrainte de l'accumulateur à ressort (24), dans lequel dispositif les soupapes de commande peuvent être commandées électriquement en fonction de paramètres d'exploitation du véhicule automobile et d'un dispositif de sélection, ainsi que par un élément de verrouillage (28) qui peut être commandé par voie électromagnétique et qui fait partie de la commande de position de stationnement (14) et, à l'état commandé, maintient le cliquet d'arrêt dans des conditions d'exploitation définies du véhicule automobile en position dégagée, dans lequel il est intégré à la commande de transmission hydraulique (10) une soupape de verrouillage (40) opérant en mode purement hydraulique, qui, lors de la sollicitation à la pression de la commande de position de stationnement (14) ou dans le cas où la position de stationnement est dégagée, maintient une pression régulée dans le système, **caractérisé en ce que** la soupape de verrouillage (40) est ménagée de manière bistable dans une conduite de pression (34) de la commande de position de stationnement (14) et est sollicitée à la pression en position de base désactivée via une conduite de commande (48) d'une soupape de commande de pression (38) et en position active de la soupape via la conduite de pression (34) de la commande de position de stationnement (14), dans lequel la soupape de verrouillage (40) est reliée via une autre conduite de commande (52) à une soupape de désactivation (42) aménagée dans la conduite de pression (34) pour commander la position de stationnement (14) en aval de la soupape de verrouillage (40) et peut être soumise à une détente de pression unilatérale via cette soupape pour revenir en position de base.

2. Dispositif selon la revendication 1, **caractérisé en ce qu'**un élément d'étranglement (50) est intercalé dans la conduite de pression (34) pour la commande de position de stationnement (14) en amont de la soupape de verrouillage (40).

3. Dispositif selon la revendication 1 ou la revendication 2, **caractérisé en ce que** la soupape de commande de pression (38) et la soupape de verrouillage (40) sont raccordées à la conduite de pression principale (36) du système, par ailleurs, la soupape de verrouillage (40) et la soupape de désactivation (42) sont commutées l'une après l'autre dans la conduite de pression (34) menant à la commande de position de stationnement (14), dans lequel dispositif, dans leur position de base désactivée, la soupape de commande de pression (38) est raccordée à la conduite de pression principale (36), la soupape de verrouillage (40) avec le retour (46) et la soupape de désactivation (42) avec la conduite de pression (34) et **en ce que** la soupape de verrouillage (40) est raccordée, via ses surfaces de commutation assurant le verrouillage ou la position de base, via une conduite de commande (48) de la soupape de commande de pression (38) ou, via une autre conduite de commande (52), avec la conduite de pression (34) en aval de la soupape de désactivation (42).

4. Dispositif selon l'une quelconque des revendications 1 à 3, **caractérisé en ce que** la soupape de commande de pression (38), la soupape de verrouillage (40) et la soupape de désactivation (42) se présentent sous la forme de soupapes à 3/2 voies.

5. Dispositif selon l'une quelconque des revendications 1 à 4, **caractérisé en ce que** la soupape de commande de pression (38), la soupape de désactivation (42) et l'élément de verrouillage (28) sont commandés via une unité de commande de transmission électronique (54) en fonction d'un dispositif à levier sélecteur (56) et/ou d'autres paramètres d'exploitation (58) du véhicule automobile.
